Europäisches Patentamt

European Patent Office

Office européen des brevets

(19)

(11)  **EP 1 139 086 A2**

(12)  **EUROPÄISCHE PATENTANMELDUNG**

(43) Veröffentlichungstag:
04.10.2001  Patentblatt 2001/40

(51) Int Cl.⁷: **G01M 15/00**

(21) Anmeldenummer: **01107641.1**

(22) Anmeldetag: **28.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **29.03.2000  DE 10015573**

(71) Anmelder: **MTU MOTOREN- UND TURBINEN-UNION FRIEDRICHSHAFEN GMBH 88040 Friedrichshafen (DE)**

(72) Erfinder:
• **Fritzsche, Martin, Dipl.-Geophys. 88400 Biberach (DE)**
• **Löhlein, Otto, Dipl.-Ing. 89171 Illerkirchberg (DE)**
• **Remele, Jörg, Dipl.-Ing. 88709 Hagnau (DE)**

(74) Vertreter: **Winter, Josef MTU Motoren- und Turbinen-Union Friedrichshafen GmbH Patentabteilung ZJXP 88040 Friedrichshafen (DE)**

(54)  **Verfahren zur Detektion von Zündaussetzern anhand der Kurbelwellendrehzahl**

(57)  Die Erfindung bezieht sich auf ein neuartiges Verfahren und eine dafür geeignete Vorrichtung zur zylinderindividuellen Bestimmung von Zündaussetzern bei einer Kolbenkraftmaschine mittels einer Klassifikationseinheit, anhand von Messdaten, welche Information über die Kurbelwellendrehzahl enthalten. Dabei werden die Messdaten in der Klassifikationseinheit einer Vorverarbeitung unterzogen und mittels eines Klassifikators klassifiziert, wobei im Rahmen der Vorverarbeitung die Daten einer Hauptachsen-Transformation HAT unterzogen werden.

Durch den erfindungsgemäßen Einsatz dieses ressourcenschonenden Verfahrens zur Erkennung von Zündaussetzern bei Kolbenkraftmaschinen beträgt der Verarbeitungsaufwand für ein Arbeitsspiel und trotz eines Messvektors v der Länge 240 weniger als 5 Kflops. Durch die Tatsache, dass die erfindungsgemäße Vorrichtung nur eines einzelnen Messdatenaufnehmers beispielsweise in Form eines einfachen, auf die Kurbelwelle aufgebrachten Zahnringes mit angekoppeltem Bewegungssensor bedarf, ist auch die mechanische Ausführung kostengünstig herzustellen und auch einfach von thermischen und sonstigen, negativen Umgebungseinflüssen entkoppelbar.

**EP 1 139 086 A2**

**Beschreibung**

Die Erfindung betrifft ein Verfahren und eine Vorrichtung zur zylinderindividuellen Bestimmung von Zündaussetzern bei einer Kolbenkraftmaschine mittels eines Klassifikators anhand der Kurbelwellendrehzahl, wobei die Information über die Kurbelwellendrehzahl vor der Klassifikation einer Transformation unterzogen wird, welche die Information in unkorrelierte Komponenten zerlegt.

Im Rahmen der Motorzustandsüberwachung ist es wichtig, Zündaussetzer bei den einzelnen Zylindern eines Motors zu erkennen, um die resultierende Laufunruhe des Motors durch Beeinflussung des Verbrennungsprozesses in den einzelnen Zylindern beeinflussen zu können.

Aus EP 0474652 B1 ist ein Verfahren bekannt, bei welchem Laufunruhewerte eines Motors unter Berücksichtigung der Zeitspannen für die Verbrennungstakte unterschiedlicher Gruppen von Zylindern berechnet werden. Der so errechnete Laufunruhewert wird sodann in einer Leerlaufregelung verwendet.

In der Schrift DE 19548604 C1 wird ein Verfahren zur Bestimmung von ungleichförmigen Zylindermomenten anhand von Motordrehzahlen beschrieben. Auf Grundlage des Signals des Drehzahlreglers werden die Momente der einzelnen Zylinder bestimmt. Zur Durchführung des Verfahrens ist es notwendig, dass während des Motorbetriebs einzelne Zylinder des Motors gezielt abgeschaltet werden können.

Das in der Patentschrift DE 19633066 C2 aufgezeigte Verfahren leitet aus dem Kurvenverlauf der momentanen Kurbelwellendrehzahl zylinderspezifisch, drehzahlabhängig unterschiedliche Kenngrößen ab, welche mit dem jeweiligen Mitteldruck der Brennräume des Motors korreliert sind.

Das in DE 19540675 C1 beschriebene Verfahren schätzt das Drehmoment einer Kolbenkraftmaschine auf der Basis eines physikalisch-mathematischen Modells aus der Kurbelwellendrehzahl. Mittels der Modellrechnung wird aus den Drehzahlwerten auf das Gasmoment einzelner Zylinder der Maschine geschlossen. Durch Differenzbildung zwischen den Zylinder individuellen und einem gemittelten Wert erhält man ein Residuum, das bei Überschreiten eines Schwellwertes das Vorhandensein eines Verbrennungsaussetzers anzeigt. Aus den Bereichen der Datenverarbeitung und Mustererkennung sind Verfahren zur Unterscheidung bzw. Klassierung unterschiedlicher Signale bekannt. Gängige Lexika (beispielsweise H.-J. Schneider "Lexikon der Informatik und Datenverarbeitung", 3. Auflage, 1991, R. Odenbourg Verlag, München), definieren dabei die Grundbegriffe und Lehrbücher (wie M. Barkat, Singal Detection and Estimation, 1991, Artech House Inc. Oder S. Haykin, Unsupervised Adaptive Filtering, Volume 1: Blind Source Separtion, John Wiley & Sons, 2000) beschreiben spezifische Verfahren. Für Mustererkennungsaufgaben geeignete Klassifikatoren werden vielfach in Lehrbüchern aufgezeigt (beispielsweise: J. Schürmann, Polynomklassifikatoren für die Zeichenerkennung, 1977, R. Oldenbourg Verlag, München; hier speziell angepasst auf die Schriftzeichenerkennung).

Der Erfindung liegt die Aufgabe zugrunde ein neuartiges Verfahren zur zylinderindividuellen Bestimmung von Zündaussetzern bei einer Kolbenkraftmaschine zu finden, bei welchem eine Klassifikationseinheit auf Messdaten, welche Informationen über die Kurbelwellendrehzahl enthalten, zurückgreift.

Die Aufgabe wird mit Hilfe einer Klassifikationseinheit gelöst, in welcher die Daten einer Vorverarbeitung unterzogen und mittels eines Klassifikators klassifiziert werden, wobei im Rahmen der Vorverarbeitung die Daten einer Transformation unterzogen werden, welche diese Daten in unkorrelierte Komponenten zerlegt.

In vorteilhafter Weise erlaubt die Erfindung die Erkennung von Zündaussetzern und die Identifikation fehlerhaft arbeitender Zylinder auch bei Motoren, welche eine sich zeitlich überlappende Auswirkung der Einzelzylinder-Impulsantworten auf das Drehzahlsignal aufweisen (z.B.: 16-Zylinder Motoren). Es muss dabei das davon herrührende komplexe Schwingungsverhalten der Kurbelwelle nicht durch aufwendige mathematische Modelle (Differentialgleichungen) nachgebildet werden.

Vorteilhaft ist der Umstand, dass unabhängig von der Anzahl der Zylinder und der aktuellen Motordrehzahl einzig das Signal der Kurbelwellendrehzahl für die Durchführung des Verfahrens notwendig ist. Es ist deshalb beispielsweise möglich, allein durch das einfache Anbringen eines Zahnkranzes auf der Kurbelwelle in Verbindung mit einem Annäherungssensor (vorzugsweise Hall-Sensor), welcher die Drehung des Zahnkranzes in Folge der Passage der einzelnen Zähne erfasst, das dynamische Verhalten der Kurbelwellendrehzahl aufzuzeichnen. Da diese Vorrichtung im allgemeinen bereits als Bestandteil der Regelung ausgebildet ist, erfordert das erfindungsgemäße Verfahren üblicherweise keine entsprechende mechanische Modifikation der Kolbenkraftmaschine.

Im allgemeinen besteht ein einzelnes Arbeitsspiel eines Motors, welches es zur Detektion von Zündaussetzern zu analysieren gilt, aus zwei Umläufen der Kurbelwelle. Weist beispielsweise der zur Detektion des dynamischen Verhaltens der Kurbelwellendrehzahl auf die Kurbelwelle aufgebrachte Zahnkranz 120 Zähne auf, so setzt sich die einem einzelnen Arbeitsspiel zuzuordnende Information aus 240 Einzelsignalen zusammen, welche von dem mit dem Zahnkranz in Verbindung stehenden Annäherungssensor geliefert werden. Dabei ist der Amplitudenwert eines jeden Einzelsignals direkt proportional zur Zeit $\Delta t$, welche zwischen der Passage zweier benachbarter Zähne des Zahnkranzes am Annäherungssensor liegt. Somit lassen sich die Einzelsignalen als direkte Information über das dynamische Verhalten der Kurbelwellendrehzahl interpretieren.

Um eine automatische Klassifikation der Information durchführen zu können, werden die einem Arbeitsspiel zuzuordnenden Einzelsignale (Merkmale des zu klassifizierenden Vorgangs oder Objekts) in einer eindeutigen Reihenfolge zu einem sogenannten Merkmalsvektor v zusammengefasst, d.h. ein Arbeitsspiel entspricht einem Vektor.

In vorteilhafter Weise werden die so generierten Merkmalsvektoren einer wenig rechenaufwendigen Hauptachsen-Transformation (HAT), auch Karhunen-Loève-Transformation (KLT) genannt, unterzogen. Ziel dieser Transformation ist es, die Merkmalsvektoren durch Projektion in einen anderen, auf das zu klassifizierende Verfahren bzw. Objekt speziell adaptierten, Raum abzubilden (Transformationsraum). In diesem Raum treten die zu klassifizierenden unterschiedlicher Zustände und Erscheinungsformen differenzierter zutage.

Bei dem der Erfindung zugrunde liegenden Aufgabe der Detektion von Zündaussetzern wird in vorteilhafter Weise nach der Erzeugung des spaltenförmigen Merkmalsvektors dessen Mittelwert μ (GI. 1) berechnet und nachfolgend die zugehörige Kovarianzmatrix **K** gebildet (GI. 2):

$$\mu = E\{v\} \qquad (GI.1)$$

$$K = E\left\{ (v - \mu)(v - \mu)^T \right\} \qquad (GI.2)$$

Aus der Kovarianzmatrix **K** erhält man die Eigenfunktionen, welche die Raumachsen des Transformationsraumes darstellen. Die nun auf diese Kovarianzmatrix *K* anzuwendende Hauptachsen-Transformation HAT dreht die Kovarianzmatrix *K* in ein Hauptachsen- oder Eigensystem, in dem die Signale miteinander unkorreliert sind (GI.3). Dabei stellt die HAT gleichzeitig eine Rangordnung unter den einzelnen Koordinatenrichtungen auf. Dabei sind die Signale (Eigenvektoren der transformierten Matrix), welche die größten Eigenwerte und damit die größte Varianz aufweisen, die aussagekräftigsten.

$$w = B^T (v - \mu) \qquad (GI.3)$$

mit v= Signale als Matrix geordnet (1 Arbeitsspiel pro Spalte)

*B*= Matrix der ersten M Eigenvektoren der Kovarianmatrix *K,* sortiert nach abfallenden Eigenwerten

*w* = transformierte Vektoren (Merkmalsvektoren die einem Klassifikator zugeführt werden können)

Ein großer Vorteil bei der Anwendung der Hauptachsen-Transformation zur Aufbereitung der Messdaten besteht in der Tatsache, dass die Messdaten direkt transformiert werden. Vorverarbeitungschritte, wie beispielsweise die aufwendige Berechnung von Frequenzspektren (FFT) entfallen.

Bei der Anwendung der HAT im Rahmen der erfindungsgemäßen Aufgabenstellung hat sich gezeigt, dass nur eine sehr geringe Anzahl M von Eigenwerten einen signifikanten Wert aufweisen, so dass nur eine kleine Anzahl von Eigenvektoren zur Berechnung der Merkmalsvektoren *w* herangezogen werden müssen. Dies resultiert wiederum in einer geringen Dimension von *w* was direkt die Dimensionierung des nachgeschalteten Klassifikators in vorteilhafter Weise beeinflusst.

Der der HAT nachgeschaltete Klassifikator kann als Standardklassifikator ausgebildet werden. Der Einsatz eines quadratischen Polynomklassifikators, wie er allgemein aus der Literatur bekannt ist, hat sich als vorteilhaft erwiesen. Durch seine einfache Struktur erfordert der Klassifikator wenig Rechenkapazität und Speicherplatz. Der Klassifikator ist in einer dem Fachmann geläufigen Weise vor seinem Einsatz mit Messdaten, die den zu klassifizierende Betriebsdaten entsprechen, zu trainieren.

Es hat sich gezeigt, dass sich bereits bei der Verwendung von Merkmalsvektoren *w*, welche lediglich 7 Merkmale enthalten, sehr gute Klassifikationsergebnisse erreichen lassen. Bemerkenswerterweise lassen sich Zündaussetzer bei Motordrehzahlen innerhalb eines sehr weiten Drehzahlbereichs (800-1800 U/min) mittels eines einzigen Klassifikators zuordnen.

In einer weiteren vorteilhaften Ausgestaltung der Erfindung ist es auch denkbar, anstelle der Hauptachsen-Transformation HAT auf die Independent Component Analyse, auch Blind-Signal Separation genannt, zur Generierung unkorrelierter Signalkomponenten zurückzugreifen. In diesem Falle sind die Signalkomponenten, die zur Bildung der Merkmalsvektoren herangezogen werden, nicht nur unkorreliert, sondern auch noch unabhängig voneinander.

Zur weiteren Verbesserung der Klassifikationsergebnisse können in vorteilhafter Weise die Messsignale vor der Transformation in unkorrelierte Komponenten mittelwertbereinigt werden. Auch ist es denkbar zur Beseitigung hochfrequenter Störungen die Messsignale vor einer Weiterverarbeitung einer Tiefpass-Filterung zu unterziehen, wobei hier darauf zu achten ist, dass ein nullphasiges Filter zur Verwendung kommt. Hilfreich ist es auch die Signale über mehrere Arbeitsspiele des Motors zu mitteln (z.B. 5-10 Arbeitsspiele).

Durch den erfindungsgemäßen Einsatz dieses ressourcenschonenden Verfahrens zur Erkennung von Zündaussetzern bei Kolbenkraftmaschinen beträgt der Verarbeitungsaufwand für ein Arbeitsspiel und trotz eines Messvektors v der Länge 240 weniger als 5 Kflops.

Durch die Tatsache dass die erfindungsgemäße Vorrichtung nur eines einzelnen Messdatenaufnehmers beispielsweise in Form eines einfachen, auf die Kurbelwelle aufgebrachten Zahnringes mit angekoppeltem Bewegungssensor bedarf, ist auch eine eventuell notwendige mechanische Modifikation der Kolbenkraftmaschine kostengünstig durchzuführen. Auch ist die erfindungsgemäße Vorrichtung durch ihre einfache Gestaltung problemlos von thermischen und sonstigen negativen Umgebungseinflüssen entkoppelbar.

**Patentansprüche**

1. Verfahren zur zylinderindividuellen Bestimmung von Zündaussetzern bei einer Kolbenkraftmaschine mittels einer Klassifikationseinheit, anhand von Messdaten, welche Information über die Kurbelwellendrehzahl enthalten,
**dadurch gekennzeichnet,**
**dass** die Messdaten in einer Datenverarbeitungseinheit einer Vorverarbeitung unterzogen und mittels eines Klassifikators klassifiziert werden, wobei im Rahmen der Vorverarbeitung die Daten einer Transformation unterzogen werden, welche diese Daten in unkorrelierte Komponenten zerlegt.

2. Verfahren nach Anspruch 1, **dadurch gekennzeichnet, dass** die Transformation eine Hauptachsen-Transformation HAT ist.

3. Verfahren nach Anspruch 1, **dadurch gekennzeichnet, dass** es sich bei der Transformation um eine Independent Component Analyse handelt.

4. Verfahren nach einem der Ansprüche 1 bis 3, **dadurch gekennzeichnet, dass** von den Daten im Vorfeld der Transformation der Mittelwert pro Arbeitsspiel abgezogen wird.

5. Verfahren nach einem der Ansprüche 1 bis 4, **dadurch gekennzeichnet, dass** die Daten im Vorfeld der Transformation einer Tiefpassfilterung mittels eines nullphasigen Filters unterzogen werden.

6. Verfahren nach einem der Ansprüche 1 bis 5, **dadurch gekennzeichnet, dass** die Daten im Vorfeld der Transformation über mehrere Arbeitsspiele gemittelt werden.

7. Vorrichtung zur zylinderindividuellen Bestimmung von Zündaussetzern bei einer Kolbenkraftmaschine, welche über eine Klassifikationseinheit zur Verarbeitung von Daten, die Informationen über die Kurbelwellendrehzahl enthalten, verfügt,
**dadurch gekennzeichnet,**
**dass** die Klassifikationseinheit aus einer Einheit zur Datenvorverarbeitung und einem Klassifikator besteht.

8. Vorrichtung nach Anspruch 7, **dadurch gekennzeichnet, dass** die Einheit zur Datenvorverarbeitung ein Modul zur Transformation der Daten in unkorrelierte Komponenten enthält.

9. Vorrichtung nach Anspruch 8, **dadurch gekennzeichnet, dass** die Einheit zur Datenvorverarbeitung ein Modul zur Hauptachsen-Transformation HAT der Messdaten enthält.

10. Vorrichtung nach Anspruch 8, **dadurch gekennzeichnet, dass** die Einheit zur Datenvorverarbeitung ein Modul zur Durchführung einer Independent Component Analyse der Messdaten enthält.

11. Vorrichtung nach einem der Ansprüche 7 bis 10, **dadurch gekennzeichnet, dass** der Klassifikator als Quadratischer Polynomklassifikator ausgeführt wird.